# EUROPÄISCHE PATENTSCHRIFT

(11) **EP 2 176 104 B1**
(45) Veröffentlichungstag und Bekanntmachung des Hinweises auf die Patenterteilung: **07.05.2014**
(21) Anmeldenummer: 08774550.1
(22) Anmeldetag: 30.06.2008
(51) Int. Cl.: B60T 8/88, B60T 7/10

(54) **STEUERUNG EINES AKTUATORS EINER BREMSE EINES KRAFTFAHRZEUGS**
CONTROL OF AN ACTUATOR OF A BRAKE OF A MOTOR VEHICLE
COMMANDE D'UN ACTIONNEUR DE FREIN DE VÉHICULE AUTOMOBILE

(30) Priorität: 02.07.2007 DE 102007030627
(43) Veröffentlichungstag der Anmeldung: 21.04.2010
(73) Patentinhaber: Continental Automotive GmbH, 30165 Hannover (DE)
(72) Erfinder: IRSIGLER, Michael, 93053 Regensburg (DE); NIEMANN, Jens, 59555 Lippstadt (DE)
(86) Internationale Anmeldenummer: PCT/EP2008/058397
(87) Internationale Veröffentlichungsnummer: WO 2009/003987

(56) Entgegenhaltungen:
- EP-A- 1 457 399
- EP-A- 1 574 869
- WO-A-01/35432
- DE-A1- 10 057 486
- DE-A1- 10 349 600

## Beschreibung

Die Erfindung betrifft eine Anordnung zur Steuerung der Aktivierung eines Aktuators einer Bremse eines Kraftfahrzeugs.

Konventionelle Parkbremsen bzw. Parkbremssysteme, beispielsweise Scheiben-, Trommel- oder "Drum-In-Hat"-Bremssysteme sind hinlänglich aus dem Stand der Technik bekannt. Hierbei wird mittels eines im Fahrzeug vorgesehenen Bremshebels manuell eine Stellkraft erzeugt, welche über ein Seilzugsystem zur Parkbremse übertragen wird. Abhängig von der an der Parkbremse anliegenden Stellkraft wird durch die Parkbremse eine Bremskraft erzeugt, welche an die Bremsenmechanikeinheit der Parkbremse übertragen wird. Die erzeugte Bremskraft ist somit proportional zu der über das Seilzugsystems übertragenen Stellkraft. Bei Vorliegen einer vorgegebenen Stellkraft liegt somit unmittelbar eine vorgegebene Bremskraft an der Bremsenmechanikeinheit an.

In zunehmenden Maße werden konventionelle rein mechanisch ansteuerbare Parkbremsen durch elektronisch ansteuerbare Parkbremsen bzw. Parkbremssysteme ersetzt, bei denen die Erzeugung der zur Betätigung der Bremsenmechanik erforderlichen Stellkraft über ein elektronisches Steuersystem gesteuert wird. Abhängig vom Vorliegen eines elektronischen Stellsignals wird die Parkbremse durch einen Aktuator angezogen oder gelöst. Zur Erzeugung einer auf die Bremsenmechanik einwirkenden mechanischen Stellkraft ist beispielsweise eine Elektromotor-Getriebeeinheit vorgesehen, welche beispielsweise mit der Bremsenmechanik über ein Seilzugssystem verbunden und über das Steuersystem ansteuerbar ist. Das elektronische Stellsignal zur Betätigung der elektronischen Parkbremse wird hierbei beispielsweise durch ein im Fahrzeug vorgesehenes elektronischen Bedienelement, insbesondere ein Tast-, Wipp- oder Schaltmodul erzeugt. Alternativ kann die elektronische Parkbremse über ein durch eine Steuerroutine erzeugtes Stellsignal gesteuert werden.

Elektronisch bzw. motorisch mittels eines Aktuators betätigte Parkbremsen für Kraftfahrzeuge haben gegenüber bisher üblichen Lösungen, in denen die Parkbremsen über Seilzüge über einen Hebel am Mitteltunnel des Kfz betätigt wurde, erhebliche Vorteile. Gegenüber der rein mechanischen Lösung haben sie den Vorteil, dass an der Mittelkonsole kein Handbremshebel benötigt wird, dass keine langen Seilzüge verlegt werden müssen, die aufwändige konstruktive Maßnahmen erfordern und entsprechende Wartungsmaßnahmen nach sich ziehen. Außerdem steht der für den Handbremshebel benötigte Raum bei der elektronischen Parkbremse für andere Zwecke zur Verfügung. Weiterhin haben elektronisch betätigbare Parkbremsen den Vorteil, dass sie unabhängig vom Kraftaufwand durch den Bediener eine gleichmäßige Wirkung auf der Bremse entfalten.

WO 01/35432 A1 offenbart ein ausfallsicheres und fehlertolerantes Schaltelement zum Einsatz bei einem Luftdruckbremssystem.

Ein besonderes Augenmerk ist bei elektronischen Parkbremsen wie auch bei anderen elektronischen Bremsen darauf zu richten, dass während der Fahrt kein unbeabsichtigtes Anziehen der Bremse erfolgt.

Der Erfindung liegt die Aufgabe zugrunde, eine effiziente Anordnung zur Steuerung der Aktivierung eines Aktuators einer Bremse eines Kraftfahrzeugs aufzuzeigen.

Diese Aufgabe wird durch eine Anordnung mit den Merkmalen des Anspruchs 1 gelöst. Vorteilhafte Ausgestaltungen und Weiterbildungen sind Gegenstand von Unteransprüchen.

Die erfindungsgemäße Anordnung zur Steuerung der Aktivierung eines Aktuators einer Bremse eines Kraftfahrzeugs umfasst einen ersten Pfad für ein erstes Signal betreffend die Aktivierung des Aktuators, einen zweiten Pfad für ein zweites Signal betreffend die Aktivierung des Aktuators, und eine Schaltung zur Ermöglichung der Aktivierung des Aktuators derart, dass der Aktuator aktiviert wird, falls eine bestimmte Änderung des ersten Signals und zusätzlich eine bestimmte Änderung des zweiten Signals vorliegt. Hierbei ist die bestimmte Änderung des ersten Signals gegenläufig zur bestimmten Änderung des zweiten Signals.

Es ist eine Bremse eines Kraftfahrzeugs betroffen, welche unter Verwendung eines Aktuators, insbesondere eines Elektromotors, betätigt werden kann, wie z.B. eine elektronische Parkbremse oder eine selbstverstärkende elektrische Bremse. Ist der Aktuator aktiviert, wirkt er durch mechanische Arbeit bzw. Bewegung auf die Bremse ein. Je nach Konstruktion der Bremse kann durch eine Aktivierung des Aktuators die Bremse angezogen und/oder gelöst werden.

Um eine Aktivierung des Aktuators herbeizuführen, werden über einen ersten und über einen zweiten Pfad Signale übertragen. Diese Pfade, z.B. elektrische Leitungen gegebenenfalls mit elektrischen Bauteilen, oder Lichtleiter oder Funkverbindungen, stellen Wege zur Übertragung der Signale dar. Die Signale können hierbei verschiedenartig ausgestaltet sein; sie dienen der Übermittlung von Informationen. Es sind zur Informationsübermittlung betreffend die Aktivierung des Aktuators zumindest der erste und der zweite Pfad und somit zumindest zwei getrennte Pfade vorhanden, so dass zumindest zwei voneinander unabhängige Signale oder ein Signal auf zwei Wegen übertragbar ist. Die Verwendung mehrerer Pfade erhöht die Sicherheit und reduziert die Wahrscheinlichkeit einer fehlerhaften Aktivierung des Aktuators.

Die Schaltung dient dazu, hinsichtlich des ersten und des zweiten Signals eine Bedingung zu prüfen. Eine Aktivierung des Aktuators soll durch die Schaltung nur dann ermöglicht werden, wenn die Bedingung erfüllt ist. Die Bedingung lautet, dass für das erste und das zweite Signal jeweils eine bestimmte Änderung vorliegt. Bei einer bestimmten Änderung kann es sich um einen einzelnen bestimmten Wert handeln, oder auch um eine Mehrzahl möglicher Werte. Die bestimmten Änderungen stehen in einem Verhältnis der Gegenläufigkeit zueinander, d.h. ihre Richtungen sind umgekehrt zueinander. Beispielsweise ist eine Änderung des ersten Signals von A nach B gegenläufig im Vergleich zu einer Änderung des zweiten Signals von B nach A. Insbesondere ist Gegenläufigkeit vorhanden bei umgekehrtem Vorzeichen der bestimmten Änderung des ersten Signals im Vergleich zur bestimmten Änderung des zweiten Signals. Eine Gegenläufigkeit der Änderung des ersten und des zweiten Signals ist z.B. nicht vorhanden, wenn diese Änderungen durch eine Gleichtaktstörung hervorgerufen werden; diese bewirkt eine gleichläufige Änderung des ersten Signals verglichen mit der durch sie hervorgerufenen Änderung des zweiten Signals.

In Weiterbildung der Erfindung handelt es sich bei der bestimmten Änderung des ersten Signals und bei der bestimmten Änderung des zweiten Signals jeweils um eine Spannungsänderung oder eine Stromänderung mit im Vergleich zueinander umgekehrtem Vorzeichen. Hierbei ist es möglich, dass der Absolutwert der bestimmten Änderung des ersten Signals gleich dem Absolutwert der bestimmten Änderung des zweiten Signals ist, oder dass sich diese Absolutwerte voneinander unterscheiden.

Möglich ist, dass die bestimmte Änderung des ersten Signals einer Änderung von einem ersten zu einem zweiten Wert und die bestimmte Änderung des zweiten Signals einer Änderung von dem zweiten zu dem ersten Wert entspricht.

In Ausgestaltung der Erfindung umfasst die Schaltung einen ersten Transistor und einen zweiten Transistor, wobei der zweite Transistor den zweiten Pfad mit dem ersten Transistor verbindet. Eine Möglichkeit ist, dass der erste Pfad direkt in den ersten Transistor mündet. Der zweite Transistor kann derart geschaltet sein, dass seine Sperrung aufgehoben wird, wenn die bestimmte Änderung des zweiten Signals vorliegt. Dies bedeutet, dass der zweite Transistor sperrt, solange nicht im zweiten Pfad die bestimmte Änderung vorhanden ist. Vorzugsweise ist das Vorhandensein der bestimmten Änderung des zweiten Signals die einzige Bedingung für die Aufhebung der Sperrung des zweiten Transistors. Der erste Transistor kann derart geschaltet sein, dass seine Sperrung aufgehoben wird, wenn die bestimmte Änderung des ersten Signals vorliegt und zusätzlich die Sperrung des zweiten Transistors aufgehoben ist. Letzteres bedeutet, dass der zweite Transistor sperrt, solange nicht die beiden genannten Bedingungen zutreffen. Vorzugsweise sind das Vorhandensein von einerseits der bestimmten Änderung des ersten Signals und andererseits der fehlenden Sperrung des zweiten Transistors die einzigen Bedingungen für die Aufhebung der Sperrung des zweiten Transistors.

In Ausgestaltung der Erfindung ermöglicht die Schaltung die Aktivierung des Aktuators, indem eine Verbindung zwischen einer elektrischen Energiequelle, z.B. der Fahrzeugbatterie oder einer anderen Batterie, und dem Aktuator hergestellt wird.

Vorteilhaft ist es, wenn der erste Pfad in der Nähe des zweiten Pfades angeordnet ist, so dass eine Gleichtaktstörung eine gleichläufige Änderung des ersten und des zweiten Signals hervorruft. Die gleiche Änderung des ersten und des zweiten Signals bedeutet hierbei eine gleichläufige Änderung gleichen Ausmaßes.

Die Aktivierung des Aktuators kann das Anziehen der Bremse bewirken. Ferner ist es möglich, dass eine Aktivierung des Aktuators zusätzlich oder alternativ ein Lösen der Bremse zur Folge hat.

Die Anordnung kann eine erste Auswerteeinheit zur Ausgabe des ersten Signals und eine zweite Auswerteeinheit zur Ausgabe des zweiten Signals aufweisen. Hierbei handelt es sich um getrennte Einheiten, die das erste und das zweite Signal unabhängig voneinander ausgeben. Die Auswerteeinheiten können z.B. aufgrund bestimmter Algorithmen und/oder Eingangssignale entscheiden, dass eine Aktivierung des Aktuators erfolgen oder beendet werden soll, und dementsprechend das erste bzw. zweite Signal ausgeben. Alternativ zur Verwendung zweier getrennter Auswerteeinheiten können diese in Form einer einzelnen Einheit vorliegen, die einerseits das erste und andererseits das zweite Signal ausgibt.

Im Folgenden wird die Erfindung anhand eines Ausführungsbeispiels näher erläutert. Dabei zeigen:
- Figur 1:: ein Kraftfahrzeug,
- Figur 2:: schematisch eine Schaltung zur Ansteuerung eines Aktuators,
- Figur 3:: einen Schaltplan zu Figur 2,
- Figur 4:: eine Schaltung mit zwei parallelen Pfaden,
- Figur 5:: eine gegenüber Figur 4 verbesserte Schaltung mit zwei parallelen Pfaden,
- Figur 6:: einen Schaltplan zu Figur 5.

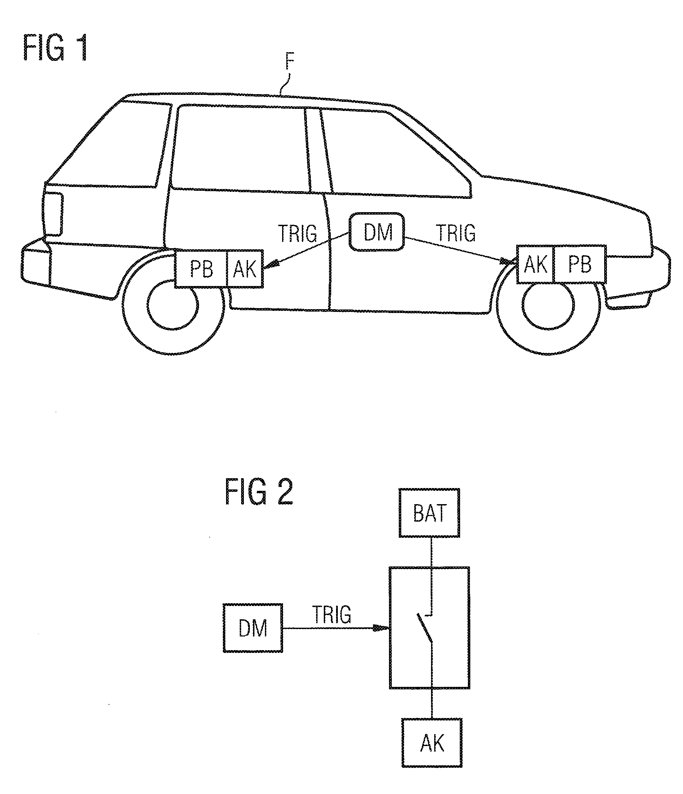

Figur 1 zeigt schematisch ein Kraftfahrzeug F mit einer Auswerteeinrichtung DM. Ferner verfügt das Fahrzeug über ein elektronisches Parkbremssystem PB. Es kann für jedes Rad des Kraftfahrzeugs F eine eigene Parkbremse PB vorgesehen sein, oder auch lediglich eine Parkbremse PB für das Kraftfahrzeug F. Exemplarisch sind in Figur 1 zwei Parkbremsen PB dargestellt. Die Auswerteeinrichtung DM entscheidet, ob die Parkbremse PB anzuziehen oder zu lösen ist. Wurde eine derartige Entscheidung getroffen, so weist die Auswerteeinrichtung DM mittels des Ausgangssignals TRIG für die Betätigung der Parkbremse PB zuständige Aktoren AK an, die Parkbremse PB zu anzuziehen bzw. zu lösen. Die Entscheidung über das Anziehen bzw. Lösen der Parkbremse PB wird von der Auswerteeinrichtung DM unter Verwendung von Informationen getroffen, welche z.B. von einem der Parkbremse PB zugeordneten vom Fahrer betätigbaren Bedienelement stammen. Auf diese Weise kann der Fahrer z.B. durch Knopfdruck die elektronische Parkbremse PB anziehen oder lösen.

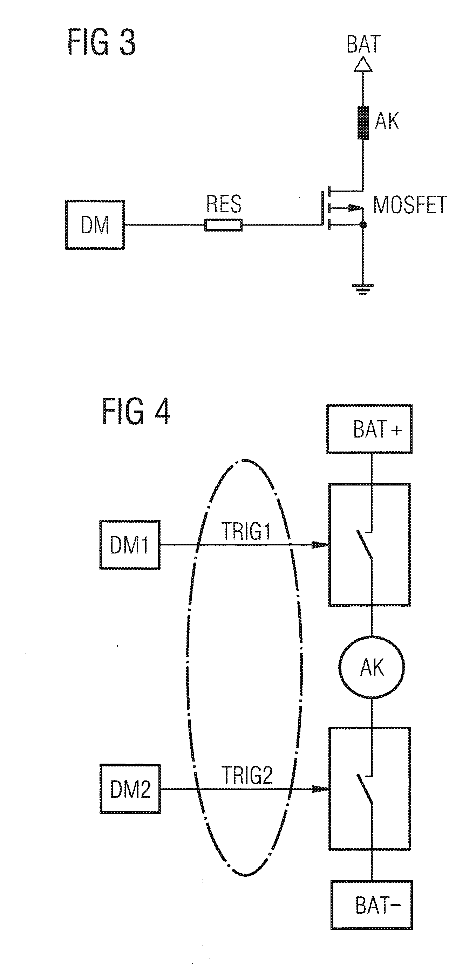

Figur 2 zeigt schematisch eine Schaltung zur Ansteuerung des Aktuators AK der Parkbremse PB. Das Ausgangssignal TRIG, welches von der Auswerteeinrichtung DM ausgegeben wird, wirkt auf einen Schalter. Durch Schließen des Schalters wird eine Verbindung zwischen einer Batterie BAT und dem Aktuator AK hergestellt. Die Batterie BAT versorgt den Aktuator AK mit Energie, so dass dieser aktiviert wird und die Parkbremse anzieht. Figur 3 zeigt einen der Figur 2 entsprechenden Schaltplan. Die Auswerteeinrichtung DM ist über einen Widerstand RES mit einem Feldeffekttransistor MOSFET verbunden. Das Ausgangssignal TRIG entspricht einem bestimmten von der Auswerteeinrichtung DM ausgegebenen Spannungsniveau. Abhängig von der von der Auswerteeinrichtung DM eingestellten Spannung sperrt der Feldeffekttransistor MOSFET. Im Normalzustand sperrt der Feldeffekttransistor MOSFET. Wird die Sperrung des Feldeffekttransistors MOSFET durch Einstellen einer bestimmten Spannung beendet, ist ein Stromfluss von der Batterie BAT durch den Aktuator AK möglich, so dass dieser aktiviert wird und die Parkbremse anzieht.

Im folgenden wird davon ausgegangen, dass die Auswerteeinrichtung DM zwei Spannungsniveaus einstellen kann: ein niedriges Spannungsniveau, im folgenden als LOW bezeichnet, z.B. 0 Volt, und ein höheres Spannungsniveau, im folgenden als HIGH bezeichnet, z.B. 5Volt. Im Normalzustand gibt die Auswerteeinrichtung DM die Spannung LOW aus, so dass der Feldeffekttransistor MOSFET sperrt und der Aktuator AK nicht aktiviert ist. Die Sperrung des Feldeffekttransistors MOSFET wird durch Änderung des Ausgangssignals TRIG der Auswerteeinrichtung DM von LOW auf HIGH beendet.

Bei sicherheitsrelevanten Funktionen wie z.B. der elektronischen Parkbremse oder eines Airbags muss vermieden werden, dass diese unbeabsichtigt, d.h. ohne eine entsprechende Entscheidung der Auswerteeinrichtung DM, aktiviert werden. Würde die Parkbremse beispielsweise während der Fahrt angezogen, könnte dies einen gravierenden Unfall zur Folge haben. Daher wird versucht, die das Anziehen der Parkbremse steuernde Schaltung derart zu konstruieren, dass eine Fehlauslösung weitestgehend ausgeschlossen werden kann.

Eine Möglichkeit, die Wahrscheinlichkeit einer Fehlauslösung zu reduzieren, ist der Einsatz zweier Pfade, wie z.B. in Figur 4 dargestellt. Die Auswerteeinrichtung DM ist in zwei Auswerteeinrichtungen DM1 und DM2 aufgeteilt. Die Auswerteeinrichtung DM1 gibt das Ausgangssignal TRIG1 aus, die Auswerteeinrichtung DM2 gibt das Ausgangssignal TRIG2 aus. Die Ausgangssignale TRIG1 und TRIG2 wirken jeweils in der in Bezug auf die Figuren 2 und 3 erläuterten Art auf einen Schalter ein, d.h. durch einen Wechsel von LOW auf HIGH der Auswerteeinrichtung DM1 wird der der Auswerteeinrichtung DM1 zugeordnete Schalter geschlossen, und durch einen Wechsel von LOW auf HIGH der Auswerteeinrichtung DM2 wird der der Auswerteeinrichtung DM2 zugeordnete Schalter geschlossen. Durch Schließen des der Auswerteeinrichtung DM1 zugeordneten Schalters wird der Aktuator AK mit dem positiven Pol BAT+ der Batterie verbunden, und durch Schließen des der Auswerteeinrichtung DM2 zugeordneten Schalters wird der Aktuator AK mit dem negativen Pol BAT- der Batterie verbunden.

Somit wird gemäß Figur 4 der Aktuator AK von der Batterie mit Strom versorgt und entsprechend die Parkbremse angezogen, wenn beide Auswerteeinrichtungen DM1 und DM2 eine gleichläufige Änderung, nämlich den gleichen Wechsel von LOW zu HIGH, durchführen. Dies entspricht einer Plausibilisierung der Ausgangssignale der Auswerteeinrichtungen DM1 und DM2: falls eine Störung, d.h. ein unbeabsichtigtes das Schließen des jeweiligen Schalters bewirkendes Signal innerhalb eines Pfades auftritt, wird die Parkbremse nicht angezogen, da zum Anziehen der Parkbremse in beiden Pfaden die gleiche Änderung, d.h. der Wechsel der Spannung von LOW zu HIGH, vorhanden sein muss. Ein Einzelfehler wird somit durch die Schaltung der Figur 4 vermieden.

Es ist jedoch möglich, dass die beiden Pfade der Figur 4 von dem gleichen Fehler / der gleichen Störung befallen werden, d.h. dass ein Gleichtaktfehler vorliegt. Ein Beispiel hierfür ist das Eindringen von Wasser oder einer anderen leitfähigen Substanz in das Gehäuse, welches die Schaltung der Figur 4 enthält, oder eine Einkopplung externer elektrischer oder magnetischer Felder. Der gemeinsame Fehler wirkt sich in beiden Pfaden gleich aus, d.h. es würde sich in beiden Pfaden die gleiche Spannung einstellen. Diese gleiche Wirkung ist in Figur 4 durch das Oval um die beiden Ausgangssignale TRIG1 und TRIG2 angedeutet. Entspricht diese gleiche Spannung dem Wert HIGH, wäre ein Schließen der beiden Schalter und somit ein Anziehen der Parkbremse die Folge.

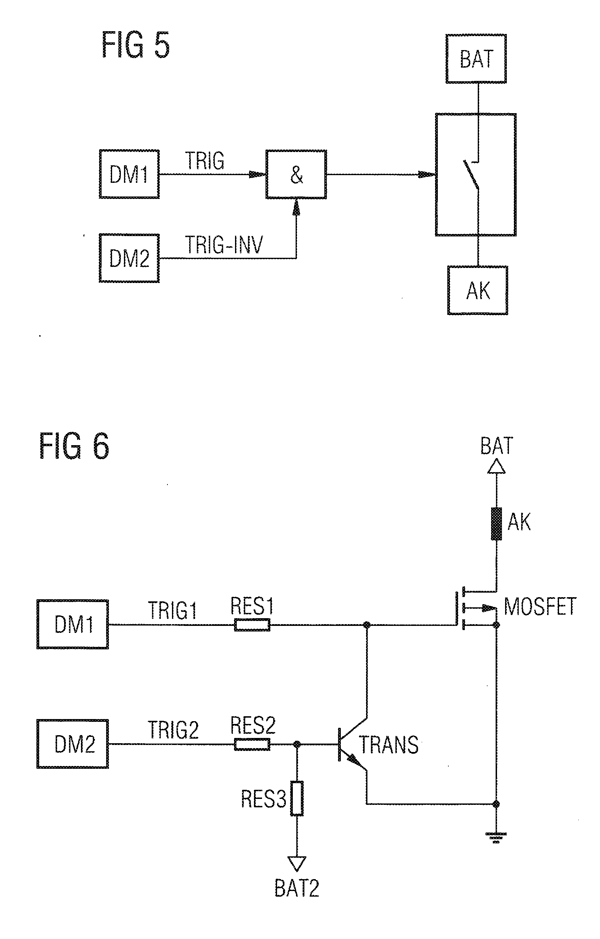

Dieses Problem des gemeinsamen Fehlers in den beiden Pfaden wird durch eine Schaltung gemäß Figur 5 vermieden. Die Auswerteeinrichtung DM1 gibt hierbei das Ausgangssignal TRIG aus, und die Auswerteeinrichtung DM2 gibt das Ausgangssignal TRIG-INV aus. Der Schalter wird geschlossen, wenn das Ausgangssignal TRIG-INV das inverse bzw. Gegenstück des Ausgangssignals TRIG ist. Dies bedeutet, dass für das Schließen des Schalters eine Änderung der Auswerteeinrichtung DM1 von LOW zu HIGH und zusätzlich, entsprechend einer logischen UND-Verknüpfung und durch das Symbol & verdeutlicht, eine Änderung der Auswerteeinrichtung DM2 von HIGH zu LOW nötig ist. Alternativ hierzu ist auch die Realisierung der umgekehrten Konstellation möglich, d.h. eine Änderung der Auswerteeinrichtung DM1 von HIGH zu LOW und zusätzlich eine Änderung der Auswerteeinrichtung DM2 von LOW zu HIGH.

Figur 6 zeigt einen Schaltungsplan zu Figur 5. Die Auswerteeinrichtung DM1 ist über den Widerstand RES1 mit dem Feldeffekttransistor MOSFET verbunden. Soll der Aktuator nicht aktiviert werden, gibt die Auswerteeinrichtung DM1 die Spannung LOW aus. Um die Sperrung des Feldeffekttransistors MOSFET aufzuheben, muss die Auswerteeinrichtung DM1 ihr Ausgangssignal ändern und somit die Spannung HIGH ausgeben. Die Auswerteeinrichtung DM2 ist über den Widerstand RES2 und einen bipolaren Transistor TRANS mit dem Feldeffekttransistor MOSFET verbunden. Ferner sind eine Batterie BAT2 auf dem Spannungsniveau HIGH und ein weiterer Widerstand RES3 vorhanden. Soll der Aktuator nicht aktiviert werden, gibt die Auswerteeinrichtung DM2 die Spannung HIGH aus. Der bipolare Transistor TRANS sperrt, es sei denn, die Auswerteeinrichtung DM2 gibt die Spannung LOW aus. Die Sperrung des Feldeffekttransistors MOSFET wird aufgehoben, wenn die Auswerteeinrichtung DM1 die Spannung HIGH und der bipolare Transistor TRANS nicht sperrt, d.h. die Auswerteeinrichtung DM2 die Spannung LOW ausgibt. Hierdurch wird der Aktuator AK von der Batterie BAT mit Strom versorgt und dementsprechend aktiviert, so dass die Parkbremse angezogen wird.

Um den Aktuator AK in der Schaltung der Figur 6 zu aktivieren, ist somit ein Wechsel des Ausgangssignals der Auswerteeinrichtung DM1 von LOW zu HIGH, und zusätzlich ein Wechsel des Ausgangssignals der Auswerteeinrichtung DM2 von HIGH zu LOW erforderlich. Tritt nun eine gemeinsamer Störung bzw. ein Gleichtaktfehler in den beiden Pfaden der Figur 6 auf, so wirkt sich dieser wie obenstehend in Bezug auf Figur 4 erläutert in beiden Pfaden auf die gleiche Weise aus, d.h. in beiden Pfaden stellt sich die gleiche Spannung ein. Da für eine Aufhebung der Sperrung des Feldeffekttransistors MOSFET jedoch eine gegenläufige Änderung der Spannungen in den beiden Pfaden nötig wäre, kann der gemeinsame Fehler nicht zu einem unbeabsichtigten Auslösen der Parkbremse führen.

Um den erläuterten Schutz gegen gemeinsame Fehler zu bewirken, ist es vorteilhaft, wenn die beiden Pfade nahe beieinander verlaufen. Auf diese Weise wird sichergestellt, dass sie von der gleichen Störung befallen werden und diese Störung dementsprechend kein unbeabsichtigtes Aktivieren des Aktuators AK bewirken kann.

Die Erfindung wurde voranstehend an einem Ausführungsbeispiel beschrieben. Es versteht sich, dass zahlreiche Änderungen und Modifikationen möglich sind, ohne dass der Rahmen der Erfindung verlassen wird. Insbesondere ist die Erfindung nicht auf den Einsatz für eine elektronische Parkbremse beschränkt; auch die Steuerung eines Aktuators für eine Betriebs- bzw. Fahrbremse eines Kraftfahrzeugs ist z.B. möglich.

## Patentansprüche

1. Anordnung zur Steuerung der Aktivierung eines Aktuators (AK) einer Bremse (PB) eines Kraftfahrzeugs (F), mit einem ersten Pfad für ein erstes Signal (TRIG1) betreffend die Aktivierung des Aktuators (AK),
einem zweiten Pfad für ein zweites Signal (TRIG2) betreffend die Aktivierung des Aktuators (AK),
einer Schaltung (MOSFET, TRANS, RES3, BAT2) zur Ermöglichung der Aktivierung des Aktuators (AK) derart, dass der Aktuator (AK) aktiviert wird, falls eine bestimmte Änderung des ersten Signals (TRIG1) und zusätzlich eine bestimmte Änderung des zweiten Signals (TRIG2) vorliegt, wobei die bestimmte Änderung des ersten Signals (TRIG1) gegenläufig ist zur bestimmten Änderung des zweiten Signals (TRIG2).

2. Anordnung nach Anspruch 1, wobei
es sich bei der bestimmten Änderung des ersten Signals (TRIG1) und bei der bestimmten Änderung des zweiten Signals (TRIG2) jeweils um eine Spannungsänderung mit im Vergleich zueinander umgekehrtem Vorzeichen handelt.

3. Anordnung nach Anspruch 1, wobei
es sich bei der bestimmten Änderung des ersten Signals (TRIG1) und bei der bestimmten Änderung des zweiten Signals (TRIG2) jeweils um eine Stromänderung mit im Vergleiche zueinander umgekehrtem Vorzeichen handelt.

4. Anordnung nach einem der Ansprüche 1 bis 3, wobei
die bestimmte Änderung des ersten Signals (TRIG1) einer Änderung von einem ersten zu einem zweiten Wert und die bestimmte Änderung des zweiten Signals (TRIG2) einer Änderung von dem zweiten zu dem ersten Wert entspricht.

5. Anordnung nach einem der Ansprüche 1 bis 4, wobei
die Schaltung (MOSFET, TRANS, RES3, BAT2) einen ersten Transistor (MOSFET) und einen zweiten Transistor (TRANS) umfasst, wobei der zweite Transistor (TRANS) den zweiten Pfad mit dem ersten Transistor (MOSFET) verbindet.

6. Anordnung nach Anspruch 5, wobei
der zweite Transistor (TRANS) derart geschaltet ist, dass seine Sperrung aufgehoben wird, wenn die bestimmte Änderung des zweiten Signals (TRIG2) vorliegt.

7. Anordnung nach Anspruch 6, wobei
der erste Transistor (MOSFET) derart geschaltet ist, dass seine Sperrung aufgehoben wird, wenn die bestimmte Änderung des ersten Signals (TRIG1) vorliegt und zusätzlich die Sperrung des zweiten Transistors (TRANS) aufgehoben ist.

8. Anordnung nach einem der Ansprüche 1 bis 7, wobei
die Schaltung (MOSFET, TRANS, RES3, BAT2) die Aktivierung des Aktuators (AK) ermöglicht, indem eine Verbindung zwischen einer elektrischen Energiequelle (BAT) und dem Aktuator (AK) hergestellt wird.

9. Anordnung nach einem der Ansprüche 1 bis 8, wobei
der erste Pfad in der Nähe des zweiten Pfades angeordnet ist, so dass eine Gleichtaktstörung eine gleichläufige Anderung des ersten Signals (TRIG1) und des zweiten Signals (TRIG2) hervorruft.

10. Anordnung nach einem der Ansprüche 1 bis 9, wobei
die Aktivierung des Aktuators (AK) das Anziehen der Bremse (PB) bewirkt.

11. Anordnung nach einem der Ansprüche 1 bis 10, mit einer ersten Auswerteeinheit (DM1) zur Ausgabe des ersten Signals (TRIG1) und einer zweiten Auswerteeinheit (DM2) zur Ausgabe des zweiten Signals (TRIG2).

12. Fahrzeug (F) mit einer Bremse (PB) und einer Anordnung nach einem der Ansprüche 1 bis 11.

## Claims

1. Arrangement for controlling the activation of an actuator (AK) of a brake (PB) of a motor vehicle (F), having a first path for a first signal (TRIG1) relating to the activation of the actuator (AK),
a second path for a second signal (TRIG2) relating to the activation of the actuator (AK),
a circuit (MOSFET, TRANS, RES3, BAT2) for permitting the activation of the actuator (AK) in such a way that the actuator (AK) is activated if a specific change occurs in the first signal (TRIG1) and additionally a specific change occurs in the second signal (TRIG2), wherein the specific change in the first signal (TRIG1) is the opposite of the specific change in the second signal (TRIG2).

2. Arrangement according to Claim 1, wherein
the specific change in the first signal (TRIG1) and the specific change in the second signal (TRIG2) are each a change in voltage with reversed signs compared to one another.

3. Arrangement according to Claim 1, wherein
the specific change in the first signal (TRIG1) and the specific change in the second signal (TRIG2) are each a change in current with reversed signs compared to one another.

4. Arrangement according to one of Claims 1 to 3, wherein the specific change in the first signal (TRIG1) corresponds to a change from a first value to a second value, and the specific change in the second signal (TRIG2) corresponds to a change from the second value to the first value.

5. Arrangement according to one of Claims 1 to 4, wherein
the circuit (MOSFET, TRANS, RES3, BAT2) comprises a first transistor (MOSFET) and a second transistor (TRANS), wherein the second transistor (TRANS) connects the second path to the first transistor (MOSFET).

6. Arrangement according to Claim 5, wherein
the second transistor (TRANS) is connected in such a way that its blocking is cancelled if the specific change in the second signal (TRIG2) occurs.

7. Arrangement according to Claim 6, wherein
the first transistor (MOSFET) is connected in such a way that its blocking is cancelled if the specific change in the first signal (TRIG1) occurs and in addition the blocking of the second transistor (TRANS) is cancelled.

8. Arrangement according to one of Claims 1 to 7, wherein
the circuit (MOSFET, TRANS, RES3, BAT2) permits the activation of the actuator (AK) in that a connection is produced between an electrical energy source (BAT) and the actuator (AK).

9. Arrangement according to one of Claims 1 to 8, wherein
the first path is arranged in the vicinity of the second path with the result that common-mode interference brings about an opposite change in the first signal (TRIG1) and in the second signal (TRIG2).

10. Arrangement according to one of Claims 1 to 9, wherein
the activation of the actuator (AK) causes the brake (PB) to be applied.

11. Arrangement according to one of Claims 1 to 10, having a first evaluation unit (DM1) for outputting the first signal (TRIG1) and a second evaluation unit (DM2) for outputting the second signal (TRIG2).

12. Vehicle (F) having a brake (PB) and an arrangement according to one of Claims 1 to 11.

## Revendications

1. Ensemble de commande de l'activation d'un actionneur (AK) d'un frein (PB) d'un véhicule automobile (F), l'ensemble présentant un premier parcours pour un premier signal (TRIG1) qui intervient dans l'activation de l'actionneur (AK),
un deuxième parcours prévu pour un deuxième signal (TRIG2) qui intervient dans l'activation de l'actionneur (AK),
un circuit (MOSFET, TRANS, RES3, BAT2) qui permet l'activation de l'actionneur (AK) de telle sorte que l'actionneur (AK) soit activé au cas où une modification définie du premier signal (TRIG1) et de plus une modification définie du deuxième signal (TRIG2) ont eu lieu, la modification définie du premier signal (TRIG1) étant opposée à la modification définie du deuxième signal (TRIG2).

2. Ensemble selon la revendication 1, dans lequel la modification définie du premier signal (TRIG1) et la modification définie du deuxième signal (TRIG2) sont toutes deux des modifications de tension de signes mutuellement opposés.

3. Ensemble selon la revendication 1, dans lequel la modification définie du premier signal (TRIG1) et la modification définie du deuxième signal (TRIG2) sont toutes deux des modifications de courant de signes mutuellement opposés.

4. Ensemble selon l'une des revendications 1 à 3, dans lequel la modification définie du premier signal (TRIG1) correspond à une modification d'une première à une deuxième valeur et la modification définie du deuxième signal (TRIG2) correspond à une modification de la deuxième à la première valeur.

5. Ensemble selon l'une des revendications 1 à 4, dans lequel le circuit (MOSFET, TRANS, RES3, BAT2) comporte un premier transistor (MOSFET) et un deuxième transistor (TRANS), le deuxième transistor (TRANS) reliant le deuxième parcours au premier transistor (MOSFET).

6. Ensemble selon la revendication 5, dans lequel le deuxième transistor (TRANS) est raccordé de telle sorte que son blocage est supprimé lorsque la modification définie du deuxième signal (TRIG2) a lieu.

7. Ensemble selon la revendication 6, dans lequel le premier transistor (MOSFET) est raccordé de telle sorte que son blocage est supprimé lorsque la modification définie du premier signal (TRIG1) a lieu et que de plus le blocage du deuxième transistor (TRANS) est supprimé.

8. Ensemble selon l'un des revendications 1 à 7, dans lequel le circuit (MOSFET, TRANS, RES3, BAT2) permet l'activation de l'actionneur (AK) en établissant une liaison entre une source (BAT) en énergie électrique et l'actionneur (AK).

9. Ensemble selon l'un des revendications 1 à 8, dans lequel le premier parcours est disposé à proximité du deuxième parcours de telle sorte qu'une perturbation synchrone provoque une modification synchrone du premier signal (TRIG1) et du deuxième signal (TRIG2).

10. Ensemble selon l'un des revendications 1 à 9, dans lequel l'activation de l'actionneur (AK) a pour effet le serrage du frein (PB).

11. Ensemble selon l'un des revendications 1 à 10, présentant une première unité d'évaluation (DM1) qui délivre le premier signal (TRIG1) et une deuxième unité d'évaluation (DM2) qui délivre le deuxième signal (TRIG2).

12. Véhicule (F) doté d'un frein (PB) et d'un ensemble selon l'une des revendications 1 à 11.
